# EUROPEAN PATENT SPECIFICATION

(11) **EP 1 055 074 B1**
(45) Date of publication and mention of the grant of the patent: **25.09.2002**
(21) Application number: 99965600.2
(22) Date of filing: 21.12.1999
(51) Int. Cl.: F16B 13/00

(54) **SELF-CUTTING BOARD ANCHOR**
SELBSTSCHNEIDENDER GIPSDÜBEL
ELEMENT D'ANCRAGE DE PANNEAU AMELIORE

(30) Priority: 21.12.1998 JP 36223498; 29.07.1999 US 354754
(43) Date of publication of application: 29.11.2000
(73) Proprietor: Ito, Katsuo, Sapporo, Hokkaido (JP)
(72) Inventor: Ito, Katsuo, Sapporo, Hokkaido (JP)
(74) Representative: Weydert, Robert
(86) International application number: IB9902094
(87) International publication number: WO00037808

(56) References cited:
- WO-A-92/14935
- GB-A- 2 241 549
- GB-A- 2 275 979
- US-A- 5 692 864

## Description

The present invention relates to a board anchor used to mount and fasten various materials to a wall composed of a fragile material.

### 2. Description of the Prior Art

Conventional board anchors such as those disclosed in Japanese Utility Model Registration No. 3000632, Japanese Utility Model Application Kokai No. 63-162120, Japanese Patent Application Publication Jitsu Kai Shou No. 3-525) show a male thread provided around a shaft part, having a drill part at one end and a flange part at the other end. At the tip of the flange part is provided a turning tool engagement hole and a female screw formed hole part continuous therewith. Mounting is performed by screwing a mounting screw into the female screw formed hole part. The user only needs to screw the anchor into the board, thereby causing the drill part to form a tap drill hole in the board, whereby a separate tap drill hole step is not required. Next, the anchor is screwed into the board by screwing the male thread of the shaft part into the tap drill hole.

In US-A-5,692,864 on which the two-part form of the independent claim 1 is based, there is disclosed a board anchor having a generally planar and triangular or spade-shaped drill end portion with a frangible web portion which holds the drill end portion together during drilling.

In the conventional board anchors the drill parts are formed into a flat pyramid-shaped drill cutting tool, so not only is the resistance great when boring the tap drill hole, but the tap drill hole easily becomes crooked. As a result, the board anchor is screwed crookedly into the board.

### Summary of the present invention

The present invention provides a board anchor that solves the aforementioned problems associated with conventional board anchors.

In accordance with the present invention there is provided a board anchor having a longitudinal axis and comprising a shaft portion provided with a male thread therearound, said shaft portion having a drill part on one end and a flange part at the other end; a turning tool engagement hole and a female screw formed hole part continuous therewith provided at the flange part end; and a slit formed in said shaft portion to split said shaft portion; mounting being performed by screwing a mounting screw into said female screw formed hole part, characterized in that said drill part is formed into a tapered pyramid-shape having a tip surface; said slit extending from the tip surface of the said pyramid-shaped drill part to midway up said shaft portion to thereby split said pyramid-shaped drill part and form multiple drill bits connected to the tip of said split shaft portion; a tap drill being formed by pushing the tips of the said drill bits into a board, opposing drill bits being displaced in opposite directions, thereby providing a drilling action.

The tip surfaces of the drill bits are preferably formed into flat surfaces orthogonal to the axis. As the mounting screw is screwed into the female screw formed hole part, the multiple split parts deform into a open-legged shape. The slit preferably is provided diagonally relative to the pyramid-shaped drill part, but it also may be provided perpendicularly relative to the sides. Multiple slits also may be provided. Preferably, the pyramid-shaped drill part has a quadrangular pyramid shape.

### DESCRIPTION OF THE DRAWING

For a better understanding of the invention reference is made to the following description which is to be read in conjunction with the accompanying drawings wherein:
Figure 1 is a front elevation view of the board anchor of the present invention;
Figure 2 is a plan view of the board anchor shown in Figure 1;
Figure 3 is the bottom view of the board anchor shown in Figure 1;
Figure 4 is a cross-sectional view along line 4-4 of Figure 1;
Figures 5(a)-5(d) illustrate how the board anchor of the present invention is utilized; and
Figure 6 is an enlarged plan view showing the pyramid-shaped tip part when a tap drill hole is formed in the board by means of the pyramid-shaped drill part.

### DESCRIPTION OF THE INVENTION

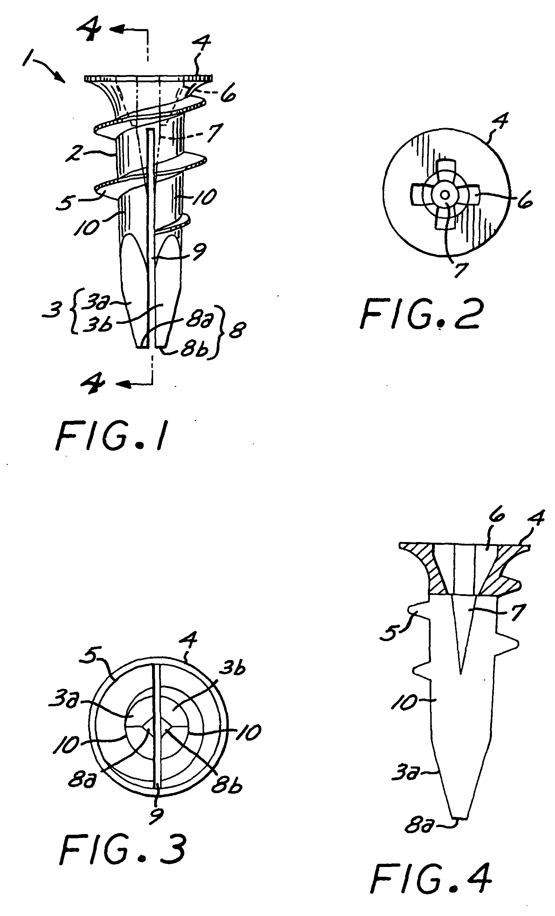

Figures 1 to 4 show the board anchor 1 of the present invention. Anchor 1 comprises shaft portion 2, which has drill part 3 at one end and flange part 4 at the other end, and is provided with male thread 5, having a high pitch. At the flange part 4 end are provided both Phillips hole 6, into which fits a Phillips screwdriver, as well as female screw formed hole 7 that continues to the said Phillips hole 6 and extends toward the drill part 3. Drill part 3 is formed into a tapered-quadrangular-pyramid shape. The tip surfaces 8 of the pyramid-shaped drill part 3 have small areas and are formed into flat surfaces orthogonal to the axis of the shaft part 2. Slit 9, which extends along the axis of the shaft portion 2 from the tip surfaces 8 of the drill part 3 to the female screw formed hole part 7, is provided diagonally relative to the quadrangular drill part 3. Slit 9 forms two split leg parts 10, 10 in shaft portion 2, and the two drill bits 3a, 3b formed by diagonally splitting the pyramid-shaped drill part 3 form the tip parts of both split legs parts 10, 10. The cross-sectional shape of both drill bits 3a, 3b is a triangular pyramid shape, and the split tip surfaces 8a, 8b form small, triangular flat surfaces.

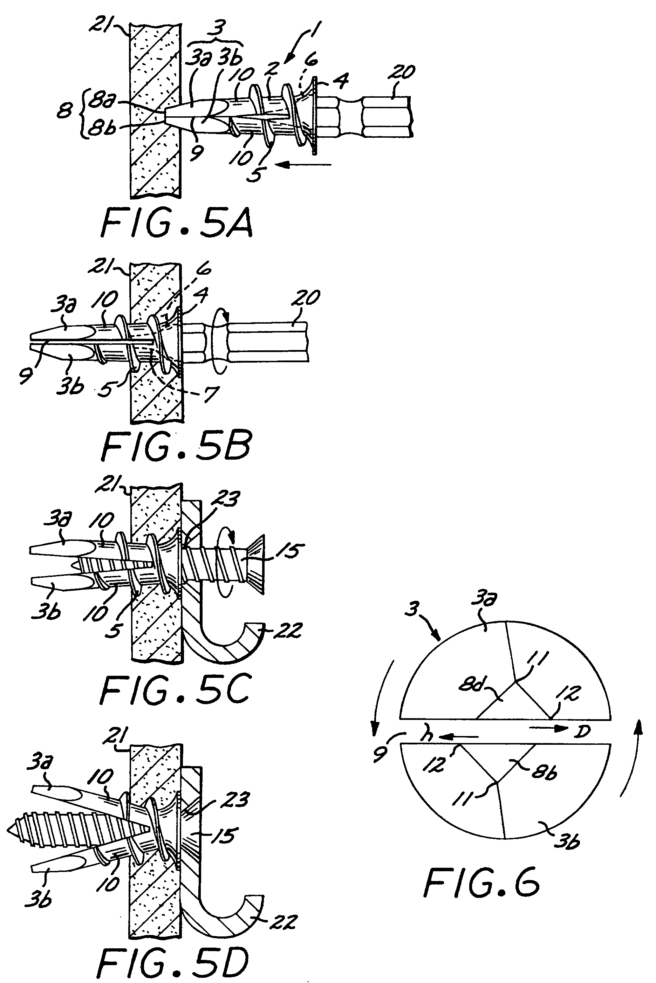

Figures 5(a)-5(b) show how the board anchor 1 is used, and in particular, how the fastening of mounted element 22 to gypsum board 21 is accomplished. In particular, the bit of Phillips screwdriver 20 initially engages the Phillips hole 6 of the anchor 1. The tip surfaces 8a and 8b of both drill bits 3a and 3b of the anchor 1 are pushed into the desired position of the board 21, after which the Phillips screwdriver 20 is used to screw in the anchor 1. At this time, the tip surfaces 8a and 8b of both drill bits 3a and 3b are formed into flat surfaces with small triangular shapes, so they push straight into the board 21. The tip parts of both drill bits 3a and 3b are twisted by the resistance force accompanying the rotation of the anchor 1. As indicated by arrows a and b in Figure 6, they are displaced in opposite directions relative to each other. As a result of this displacement, the two corners 11 and 12 of both drill bits 3a and 3b function as drill cutting tools, thereby boring a tap drill hole in the board 21. The tap drill hole formed by both drill bits 3a and 3b is bored very smoothly and rapidly by the four corners 11, 11 and 12, 12. Moreover, a nearly perfect circle is formed straight into in the board 21, with no burrs. The male thread 5 of the anchor 1 screws into the inner surface of the tap drill hole formed in this manner. The conical drill part 3 projects from the back side of the board 21, and the anchor 1 is fastened to the board 21, with the flange part 4 flush with the surface of the board 21 (see Figures 5(a) and 5(b)). In this manner, the anchor 1 is mounted by simply screwing it directly into the board 21, without preparing a tap drill hole.

Next, as shown in Figure 5(c), the mounting screw 15 pushed through the hole 23 of the mounted element 22 is inserted into the female screw formed hole part 7 from Phillips hole 6 of the anchor 1, and the screwing action secures the mounted element 22 to the board 21 by means of the mounting screw 15. Also, as shown in Figure 5(d), as the mounting screw 15 screws in, both split legs 10, 10 of the shaft part 2 are forced apart by the screw 15. The male thread 5 cuts into the board 21, so the entire anchor 1 is more firmly fastened to the board 21. Furthermore, the openness of both split legs 10, 10 increases with the outside diameter of the mounting screw 15 screwed into the anchor 1, which is convenient.

In the preferred embodiment, slit 9 is provided diagonally along the pyramid-shaped drill part 3, but it also may be provided perpendicularly relative to the sides. Furthermore, multiple slits 9 may be provided. Also, although the preferred shape of the pyramid-shaped drill part 3 is a quadrangular pyramid, it also may be a triangular, pentagonal or hexagonal pyramid.

The board anchor of the present invention requires no preparation of a tap drill hole in the board, so it is possible to secure a device by screwing the anchor directly into the board. A particularly remarkable effect is exhibited in the following instance. The drill part provided at one end of the anchor's shaft portion is formed into a tapered-pyramid shape. A slit that extends from the tip surface of the pyramid-shaped drill portion to midway up the said shaft part is provided, thereby forming multiple split shaft portions. At the tips of the split shaft parts are connected multiple drill bits that are formed by splitting the said pyramid-shaped drill part. The tip surfaces of the drill bits bore a tap drill hole by pushing into the board. At this time, the opposing drill bits are displaced in opposite directions, thereby exhibiting superior drilling functionality. As a result, a tap drill hole is formed easily and rapidly in the board, so it is possible to rapidly and correctly screw the anchor into the board.

## Claims

1. A board anchor (1) having a longitudinal axis and comprising a shaft portion (2) provided with a male thread (5) therearound, said shaft portion (2) having a drill part (3) on one end and a flange part (4) at the other end; a turning tool engagement hole (6) and a female screw formed hole part (7) continuous therewith provided at the flange part end; and a slit (9) formed in said shaft portion (2) to split said shaft portion (2); mounting being performed by screwing a mounting screw (15) into said female screw formed hole part (7), **characterized in that** said drill part (3) is formed into a tapered pyramid-shape having a tip surface (8); said slit (9) extending from the tip surface (8) of the said pyramid-shaped drill part (3) to midway up said shaft portion (2) to thereby split said pyramid-shaped drill part (3) and form multiple drill bits (3a,3b) connected to the tip of said split shaft portion (2); a tap drill being formed by pushing the tips (8a,8b) of the said drill bits (3a,3b) into a board (21), opposing drill bits (3a,3b) being displaced in opposite directions, thereby providing a drilling action.

2. The board anchor according to claim 1, **characterized in that** the tips (8a,8b) of the said drill bits (3a,3b) are formed into flat surfaces orthogonal to said longitudinal axis.

## Patentansprüche

1. Verankerungselement (1) für Paneele, mit einer Längsachse und einem Schaftteil (2), der mit Aussengewinde (5) um den Schaftteil (2) versehen ist, wobei der Schaftteil (2) einen Bohrerteil (3) an einem Ende und einen Kopfteil (4) an dem anderen Ende aufweist; einem Drehzeugeingriffsloch (6) und einem daran angrenzenden Lochteil (7) mit Innengewinde in dem Kopfendteil; und einem Schlitz (9) in dem Schaftteil (2) zum Spalten des Schaftteiles (2); wobei die Befestigung erfolgt durch Einschrauben einer Befestigungsschraube (15) in den Lochteil (7) mit Innengewinde, **dadurch gekennzeichnet dass** der Bohrerteil (3) eine verjüngte Pyramidform mit einer Endfläche (8) aufweist; wobei der Schlitz (9) von der Endfläche (8) des pyramidförmigen Bohrerteiles (3) über die halbe Länge des Schaftteiles (2) erstreckt zum Spalten des pyramidförmigen Bohrerteiles (3), um mehrere Bohrerspitzen (3a, 3b) zu formen, die mit der Spitze des gespaltenen Schaftteiles (2) verbunden sind; wobei ein Gewindeloch geformt wird durch Eintreiben der Enden (8a, 8b) der Bohrerspitzen (3a, 3b) in ein Paneel (21), und gegenüberliegende Bohrerspitzen (3a, 3b) in entgegengesetzten Richtungen versetzt sind, um somit eine Bohrwirkung zu erzielen.

2. Verankerungselement für Paneele nach Anspruch 1, **dadurch gekennzeichnet dass** die Enden (8a, 8b) der Bohrerspitzen (3a, 3b) flache Flächen aufweisen, die rechtwinklig zu der Längsachse angeordnet sind.

## Revendications

1. Elément d'ancrage (1) pour panneaux, ayant un axe longitudinal et comportant une partie de tige (2) pourvue d'un filetage externe autour de la partie de tige (2), cette partie de tige (2) ayant une partie de foret (3) à l'une de ses extrémités et une partie de tête (4) à l'autre extrémité ; un trou (6) d'engagement d'un outil de rotation à l'extrémité de la partie de téta et une partie de trou (7) contiguë à ce trou d'engagement et pourvu d'un filetage interne ; et une fente (9) formée dans la partie de tige (2) pour fendre la partie de tige (2) ; le montage étant effectué par vissage d'une vis de montage (15) dans le filetage interne de la partie de trou (7), **caractérisé en ce que** la partie de foret (3) a une forme pyramidale qui s'amincit et qui est pourvue d'une surface de sommet (8) ; ladite fente (9) s'étendant de la surface de sommet (8) de la partie de foret pyramidale (3) à mi-longueur de la partie de tige (2) en vue de fendre ladite partie de foret pyramidale (3) et de former plusieurs pointes de foret (3a, 3b) connectées audit sommet de la partie de tige fendue (2) ; un trou taraudé étant formé en forçant les sommets (8a, 8b) des pointes de foret (3a, 3b) dans un panneau (21), les pointes de foret (3a, 3b) opposées étant déplacées l'une de l'autre en directions opposées en vue de l'obtention d'une action de forage.

2. Elément d'ancrage pour panneaux selon la revendication 1, **caractérisé en ce que** les sommets (8a, 8b) des pointes de foret (3a, 3b) sont formés par des surfaces plates orthogonales à l'axe longitudinal.
